# DEMANDE DE BREVET EUROPEEN

(11) **EP 0 677 493 A2**
(43) Date de publication de la demande: **18.10.1995**
(21) Numéro de dépôt: 95106706.5
(22) Date de dépôt: 27.06.1991
(51) Int. Cl.: C03C 17/25, C03C 17/34

(54) **Procédé de formation d'une couche d'oxydes d'aluminium et d'étain sur du verre, verre obtenu et son utilisation dans des vitrages à couche semi-conductrice**

(30) Priorité: 05.07.1990 FR 9008531; 05.07.1990 FR 9008530
(62) Demande divisionnaire de: 91401746.2
(71) Demandeur: SAINT-GOBAIN VITRAGE, F-92400 Courbevoie (FR)
(72) Inventeur: Zagdoun, Georges, F-92250 La Garenne Colombes (FR); Cordier, Bruno, F-77100 Nanteuil Les Meaux (FR)
(74) Mandataire: Renous Chan, Véronique

(57) **Abrégé**

Le procédé consiste à former, par pyrolyse liquide, sur du verre porté à température élevée, une couche d'Al₂O₃-SnO₂ à partir d'une solution comprenant un chélate d'aluminium non hydrolysable, et au moins un composé organique de l'étain.

Application aux vitrages à couche semi-conductrice présentant une couleur neutre en réflexion.

## Description

La présente invention concerne un procédé pour former sur un support de verre, une couche d'oxydes d'aluminium et d'étain ; elle concerne aussi un verre portant cette couche ainsi que son utilisation, en particulier, dans des vitrages comprenant une mince couche transparente semi-conductrice d'oxyde métallique, utilisables dans le bâtiment ou dans l'automobile.

Des vitrages destinés aux bâtiments sont avantageusement constitués en verre silico-sodo-calcique clair qui présente des facteurs de transmission lumineuse et énergétique élevés, par exemple proches de 90 % pour une épaisseur de 4 mm. Pour améliorer le confort des utilisateurs, notamment en hiver, en réduisant la perte énergétique due à une fuite de calories de l'intérieur du bâtiment vers l'extérieur, il est connu de constituer un vitrage en recouvrant une face d'une feuille de verre d'une couche semi-conductrice d'oxyde métallique, dite de basse émissivité, qui accroît le taux de réflexion du vitrage dans l'infrarouge. Un tel vitrage en verre revêtu d'une telle couche peut être associé à une autre feuille de verre non revêtue, emprisonnant entre elles un espace d'air, pour constituer un vitrage double isolant.

Des vitrages portant des revêtements transparents et présentant des propriétés de basse émissivité sont connus. Ils peuvent être constitués par exemple d'un support de verre et d'une mince couche d'oxyde métallique, telle qu'une couche d'oxyde d'étain dopé, par exemple au fluor, ou bien une couche d'oxyde d'indium dopé à l'étain (ITO).

Ces couches peuvent être obtenues par différents procédés, procédés sous vide (évaporation thermique, pulvérisation cathodique) ou par pyrolyse de composés métalliques sous forme de solution, de poudre ou de vapeur, projetés sur le substrat chauffé. Dans ce cas, les composés, au contact du verre chauffé à température élevée, se décomposent et s'oxydent pour former une couche d'oxyde métallique.

Les couches, telles qu'une couche d'oxyde d'étain dopé au fluor ou une couche d'ITO, présentent des propriétés satisfaisantes pour être utilisées, notamment dans des vitrages bas émissifs.

Les propriétés optiques et électriques de ces couches les rendent aussi utilisables pour former des vitrages d'automobile, par exemple des vitrages chauffants, notamment des pare-brise, et comme substrats dans des produits particuliers, des dispositifs opto-électroniques tels que des cellules photovoltaïques et des dispositifs d'affichage à cristaux liquides.

Cependant, aux épaisseurs nécessaires à l'obtention de propriétés électroniques intéressantes, les couches sont colorées en réflexion. Ainsi, les couches d'oxyde d'étain dopé au fluor et les couches d'ITO, d'une épaisseur de 180 nm, sont bleues en réflexion et celles ayant une épaisseur de 360 nm sont vertes.

Cette couleur peut ne pas plaire ou ne pas être adaptée à l'utilisation envisagée. En outre, de légères variations d'épaisseur des couches entraînent des irrégularités de couleur (iridescence).

Pour éliminer ou réduire cette coloration en réflexion ou ces irisations, il a été proposé de déposer sur le substrat en verre, avant de former la couche semi-conductrice, une couche dite intermédiaire ou sous-couche, dont l'épais-seur géométrique et l'indice de réfraction sont tels que l'association des couches intermédiaire et semi-conductrice forme une structure de couleur neutre en réflexion.

Des couches connues présentant un indice de réfraction approprié pour former une telle structure sont par exemple formées d'oxyde métallique ou de nitrure métallique ou de leurs mélanges ; ce sont par exemple des couches d'oxyde d'aluminium, des couches d'oxycarbure de silicium ou d'oxynitrure de silicium, des couches d'oxyde d'aluminium associé à d'autres oxydes comme SnO₂, ZnO, In₂O₃, TiO₂, etc...

Ces couches intermédiaires d'indice de réfraction et d'épaisseur géométrique spécifiques permettent d'éliminer ou de réduire d'une manière importante la couleur observée en réflexion de la couche semi-conductrice. En ce qui concerne les irisations, dues aux variations d'épaisseurs dans la couche semi-conductrice, bien qu'elles soient réduites notablement par la présence de cette couche intermédiaire, on peut cependant encore observer des irisations sous forme de bandes approximativement parallèles, qui ressemblent à des ondulations colorées, dont le pas est, certes, plus grand que lorsque le produit ne comprend pas de couche intermédiaire entre le substrat en verre et la couche semi-conductrice, mais qui sont cependant non appropriées pour un produit de bonne qualité.

La présente invention a donc pour objet la formation, sur un substrat en verre, d'un film mince transparent présentant une bonne adhérence au verre, en particulier un film d'Al₂O₃-SnO₂, pouvant servir de couche intermédiaire entre le substrat en verre et une couche transparente d'oxyde métallique, notamment semi-conductrice, pour former un produit qui n'a pas les inconvénients précités, et notamment qui présente une couleur neutre en réflexion et pas d'irisations ou ondulations.

L'invention a aussi pour objet des produits comprenant un substrat en verre et une mince couche transparente d'oxydes d'aluminium et d'étain, et en outre une couche transparente semi-conductrice, ces produits présentant des caractéristiques de transparence et de conductivité électrique appropriées pour former des vitrages chauffants, vitrages bas émissifs, substrats pour des dispositifs opto-électroniques tels que des cellules photo-voltaïques et des dispositifs d'affichage à cristaux liquides.

Le procédé selon l'invention pour former une couche d'oxydes d'aluminium et d'étain, sur un support en verre chauffé à une température inférieure à sa température de ramollissement, consiste à projeter, sur le support, des composés organiques de l'aluminium et de l'étain, qui se décomposent thermiquement au contact du verre chaud et s'oxydent pour former ladite couche d'oxydes. Ce procédé se caractérise en ce qu'on projette, sur ce support chaud, une solution d'un chélate d'aluminium non hydrolysable et d'au moins un composé de l'étain.

Avantageusement, le chélate d'aluminium non hydrolysable est l'acétylacétonate d'aluminium ou l'isovalérylacétonate d'aluminium. Le chélate d'aluminium choisi pour la réalisation de l'invention doit être non hydrolysable : en effet, un chélate hydrolysable se transforme en hydrate d'alumine qui précipite et n'est plus pyrolysable.

Pour former la solution de chélate d'aluminium, on utilise tout solvant de ce composé et, de préférence, un solvant commun aux trois composés organométalliques utilisés dans l'invention, notamment l'acétate d'éthyle.

D'une manière générale, la concentration en chélate d'aluminium dans la solution doit permettre d'avoir une viscosité appropriée pour être utilisée dans les dispositifs de pulvérisation employés habituellement pour la mise en oeuvre du procédé de pyrolyse.

Le chélate d'aluminium est dissous dans le solvant de préférence pour obtenir une concentration de 1 à 3 g d'alu-minium métallique pour 100 ml de solution.

Les composés de l'étain utilisables pour la réalisation de l'invention sont des composés organiques contenant de l'oxygène. En particulier, ces composés ne contiennent pas d'halogène. En effet, la présence de chlore, par exemple, peut entraîner la formation de chlorure de sodium par suite de la réaction avec les ions sodium du support de verre, ce qui modifie les caractéristiques optiques du verre. Des composés de l'étain utilisables sont par exemple l'oxyde de dibutylétain (DBTO) et l'acétate de dibutylétain (DBTA).

Ce rapport des concentrations en composé de l'aluminium et en composé de l'étain, exprimés en poids de métal (Al/Sn) dans la solution, est avantageusement compris entre 0,10 et 0,70.

Le procédé utilisé pour former les couches d'Al₂O₃-SnO₂ selon l'invention est un procédé de pyrolyse en phase liquide. Des procédés de pyrolyse liquide et des dispositifs pour leur mise en oeuvre sont décrits par exemple dans les brevets français 2 176 760, 2 211 411 et les brevets européens 12 679, 25 738, 60 747 et 51 538.

D'une manière générale, le procédé consiste à faire passer un ruban de verre, formé par exemple dans un four "float" et maintenu à température élevée, dans un poste de pulvérisation d'une solution de composés métalliques ther-miquement décomposables à la température du ruban de verre. Le gaz servant à l'atomisation du liquide est l'air ou l'azote. Ce poste comprend essentiellement un ou plusieurs pistolets pulvérisateurs de la solution, qui peuvent être animés d'un mouvement transversal de va-et-vient au-dessus du ruban de verre.

Le ruban de verre est à une température inférieure à la température de ramollissement du verre, température qui dépend de la composition du verre. Elle est généralement comprise entre 500°C et 750°C et, en particulier, pour la réalisation de l'invention, entre 600°C et 650°C.

Le contrôle du débit de liquide envoyé dans les pistolets pulvérisateurs, de la vitesse de défilement du verre et de celle de déplacement transversal des pistolets lorsque ceux-ci sont mobiles, permet d'adapter l'épaisseur du dépôt en fonction de l'utilisation ultérieure envisagée.

Ainsi, on peut obtenir des couches d'Al₂O₃-SnO₂ ayant une épaisseur de 40 nm à 150 nm qui sont utiles notamment dans des vitrages anti-reflets, bas émissifs et chauffants.

En contrôlant la quantité des composés d'aluminium et d'étain dans la solution de pulvérisation, on peut adapter l'indice de réfraction de la couche finale en fonction de l'utilisation souhaitée.

Ainsi, par le procédé selon l'invention et par un choix approprié des concentrations en composés, exprimées en poids de métal incorporé dans une couche d'Al₂O₃-SnO₂ avec un rapport Al/Sn compris entre 1,15 et 1,40, on peut obtenir des couches ayant un indice de réfraction compris entre 1,65 et 1,76. Notamment, pour obtenir des couches présentant un indice de réfraction situé dans cet intervalle, on peut utiliser des solutions de pulvérisation contenant de 13 à 30 % en volume de dibutyldiacétate d'étain (DBTA) ou bien contenant de 30 % à 50 % en volume d'oxyde de dibutylétain (DBTO).

Pour des quantités en dehors de ces intervalles, on n'obtient pas des couches ayant les propriétés souhaitées pour être utilisables dans des vitrages tels que mentionnés précédemment. En effet, pour des quantités plus faibles que la limite inférieure des intervalles, les couches obtenues ont des indices de réfraction trop faibles. Pour des quantités supérieures à 30 % en DBTA, par exemple avec 35 % en volume, on obtient une couche fortement hétérogène, probablement due à une solution trop visqueuse. Pour des quantités de DBTO supérieures à 50 % en volume, on obtient une couche d'une bonne homogénéité, mais elle présente un indice de réfraction trop élevé pour des utilisations envisagées comme vitrages tels que mentionnés précédemment.

On prépare généralement les solutions des composés de l'aluminium et de l'étain, utilisées lors de la pulvérisation sur le support de verre, en dissolvant, au préalable, séparément, les composés dans un de leurs solvants.

L'oxyde de dibutylétain (DBTO) peut être dissous de préférence dans un alcool comme l'éthanol ou le propanol-1. Ces solvants n'influencent pas d'une manière significative les rendements de pyrolyse des solutions.

La concentration en DBTO dans cette solution est de 300 g à 800 g par litre d'alcool et avantageusement de 700 g environ par litre d'alcool.

Les solvants du dibutyldiacétate d'étain (DBTA) sont par exemple les alcools inférieurs comme l'éthanol ou le propanol et des esters tels que l'acétate d'éthyle.

On utilise de préférence le DBTA pur.

La présence des composés particuliers selon l'invention, chélate d'aluminium et composés de l'étain non halogéné comprenant de l'oxygène comme le DBTO et DBTA ou chélate d'aluminium, permet d'obtenir, sur le substrat de verre, par pyrolyse liquide, une couche qui adhère bien au verre, qui est homogène et a une épaisseur très uniforme. Selon l'invention, on peut obtenir des couches ayant une épaisseur comprise entre 40 nm et 150 nm avec une variation d'épaisseur Δ e/e inférieure ou égale à 5 %. Les couches d'oxydes d'aluminium et d'étain obtenues par le procédé selon l'invention ont, en outre, un coefficient d'absorption de la lumière faible, inférieur ou égal à 3%. On peut obtenir des couches ayant un indice de réfraction compris entre 1,73 et 1,80.

D'autre part, l'utilisation d'une grande quantité de solvant a pour effet de refroidir le ruban de verre de sorte que les composés organométalliques peuvent ne pas être décomposés de façon satisfaisante par la chaleur, ce qui conduit à des couches de propriétés médiocres.

Les couches minces d'Al₂O₃-SnO₂ selon l'invention peuvent être obtenues dans les conditions de fabrication industrielle du substrat de verre. Ceci constitue un avantage important. En effet, les verres qui portent un revêtement transparent semi-conducteur d'oxyde métallique, utiles pour former des vitrages tels que ceux mentionnés précédemment sont avantageusement fabriqués industriellement sur la ligne de production du verre lui-même.

Dans le cas du verre "float", le ruban de verre se déplace à des vitesses de défilement pouvant varier entre 3 et 25 m/mn. Des procédés de formation de ces couches et des dispositifs pour la mise en oeuvre de ces procédés ont été mis au point pour permettre d'obtenir les couches semi-conductrices d'oxydes métalliques souhaitées sur du verre se déplaçant à de telles vitesses. Les sous-couches d'épaisseur et d'indice de réfraction spécifiques, prévues pour former, avec la couche semi-conductrice, une structure de couleur neutre en réflexion et sans irisations, doivent donc pouvoir être aussi formées sur la ligne de production du verre, c'est-à-dire en tenant compte de la vitesse de défilement du ruban de verre, de sa température et des dispositifs utilisés habituellement pour la formation des couches semi-conductrices d'oxydes métalliques.

Le substrat peut être formé d'un verre silico-sodo-calcique utilisé classiquement pour les vitrages automobiles et pour les bâtiments. Il peut s'agir d'un verre clair, c'est-à-dire non coloré, présentant une transmission lumineuse importante, par exemple supérieure à 90 % sous une épaisseur de 4 mm. Il peut s'agir aussi, d'un verre coloré dans sa masse apte à procurer un confort d'été accru pour les passagers du véhicule ou du local équipé de tels verres, du fait de sa transmission énergétique réduite. D'une manière générale, pour des vitrages pour automobiles par exemple, on choisit le verre, constituant le substrat, pour respecter les réglementations, c'est-à-dire un ensemble verre et couche ayant une transmission lumineuse (T_{L}) d'au moins 75 % ou 70 % suivant les législations.

Comme verre coloré, on peut utiliser du verre dit "TSA" contenant Fe₂O₃ dans des proportions pondérales de l'ordre de 0,55 à 0,62 %, FeO pour environ 0,11 à 0,16 %_{,} ce qui conduit à un rapport Fe²⁺/Fe de l'ordre de 0,19 à 0,25, CoO pour moins de 12 ppm et même de préférence pour moins de 10 ppm.

Il en résulte des propriétés, par exemple, pour une épaisseur de 3,85 mm, de transmission lumineuse (T_{L}) élevée voisine de 78 %, (illuminant D₆₅), un facteur énergétique de transmission (T_{E}) relativement bas et voisin de 60, ce qui conduit à un rapport T_{L}/T_{E} de l'ordre de 1,30.

On peut aussi utiliser comme verre coloré, en particulier lorsque la réglementation n'impose qu'une transmission lumineuse de 70 %, un verre un peu plus coloré que le "TSA", mais présentant par contre une transmission lumineuse un peu plus faible, à savoir un verre "TSA²⁺".

Ce verre "TSA²⁺" est coloré par les mêmes oxydes que précédemment mais dans des proportions légèrement différentes.

Ainsi, les proportions d'oxydes métalliques sont les suivantes :
- Fe₂O₃ :: approximativement compris entre 0,75 et 0,90 %
- FeO :: approximativement compris entre 0,15 et 0,22% soit Fe²⁺/Fe = 0,20 environ
- CoO :: inférieur à 17 ppm et même de préférence inférieur à 10 ppm
Il en résulte pour ce verre "TSA²⁺", en 3,85 mm d'épaisseur les propriétés suivantes :
- T_{L} :: de l'ordre de 72 %
- T_{E} :: de l'ordre de 50 %
ce qui conduit à un rapport T_{L}/T_{E} de l'ordre de 1,40 ou 1,50.

Les couches d'Al₂O₃-SnO₂ obtenues selon l'invention sont particulièrement utiles dans des produits comprenant un substrat en verre et une mince couche transparente semi-conductrice d'oxyde métallique, pour former des vitrages transparents chauffants ou bas émissifs. Les couches d'Al₂O₃-SnO₂ sont, alors, des sous-couches, jouant le rôle d'une couche appelée couche anti-couleur, qui forme, avec la couche semi-conductrice, une structure de couleur neutre en réflexion et ne présentant pas d'irisations ou d'ondulations colorées.

Différentes couches semi-conductrices peuvent être déposées sur la couche d'Al₂O₃-SnO₂ selon l'invention. Ces couches peuvent être notamment des couches d'oxyde d'étain dopé au fluor (SnO₂:F) ou bien des couches d'oxyde d'indium dopé à l'étain (ITO), ou bien encore des couches d'oxyde de zinc dopé à l'indium ou à l'aluminium, comme indiqué précédemment.

Les couches de SnO₂:F et ITO peuvent être avantageusement obtenues par pyrolyse de poudres. Ainsi, on peut fabriquer les couches d'oxyde d'étain dopé au fluor à partir d'oxyde de dibutylétain (DBTO) en poudre et d'acide fluorhydrique anhydre gazeux, comme il est décrit dans le brevet français 2 380 997, à partir de difluorure de dibutylétain (DBTF) éventuellement, en mélange avec du DBTO comme décrit dans le document européen EP-A 178 956 ou EP-A-039 256. En ce qui concerne les couches d'ITO, on peut les obtenir par exemple à partir de formiate d'indium et d'un composé de l'étain comme le DBTO comme décrit dans le document EP-A-192 009.

On peut aussi obtenir les couches semi-conductrices de SnO₂:F par pyrolyse en phase gazeuse, notamment à partir d'un mélange de composés d'étain comme (CH₃)₂ SnCl₂, (C₄H₉)₂ SnCl₂, Sn (C₂H₅)₄ et de composés organofluorés tels que CCl₂F₂, CHClF₂ et CH₃CF₂ comme décrit dans le brevet EP-A-027 403 ou bien encore à partir de monobutyltrichloroétain et un composé de formule x CHF₂ tel que le chlorodifluorométhane mentionné dans le brevet européen EP-A-121 459.

Les couches d'oxyde de zinc dopé à l'indium ou à l'aluminium peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

Les couches de SnO₂:F peuvent aussi être obtenues en phase liquide à partir d'acétylacétonate d'étain ou de diméthylétain-2-propionate dans des solvants organiques appropriés comme décrits notamment dans le brevet français 2 211 411.

On a trouvé qu'en mettant en oeuvre le procédé de l'invention, en utilisant les composés spécifiques mentionnés en concentrations telles que le rapport Al/Sn dans la couche (défini précédemment) soit compris entre 1,15 et 1,40, on pouvait obtenir des couches d'Al₂O₃-SnO₂ très homogènes d'indice de réfraction compris, respectivement, entre 1,65 et 1,76...

Avec des couches d'Al₂O₃-SnO₂ d'une épaisseur comprise entre 80 nm et 100 nm, associées à une couche semi-conductrice d'oxyde métallique, telle que mentionnée précédemment et ayant une épaisseur interférentielle (100 à 800 nm), on peut obtenir une structure de couleur neutre en réflexion et ne présentant pas d'irisations ou d'ondulations telles que décrites précédemment, et qui, par conséquent, peut être utile pour former des vitrages chauffants, notamment pour automobile ou des vitrages bas émissifs, notamment pour le bâtiment. En particulier, lorsque la couche semi-conductrice des vitrages bas émissifs est constituée par une couche de SnO₂:F, ces vitrages présentent une émissivité inférieure ou égale à 0,27, et particulièrement inférieure ou égale à 0,25, pour une épaisseur de la couche semi-conductrice supérieure ou égale à 300 nm.

La neutralité optique en réflexion de la structure formée par la sous-couche d'Al₂O₃-SnO₂ et la couche semi-conductrice dépend, comme il est connu, de l'indice de réfraction et de l'épaisseur géométrique de la sous-couche.

La neutralité optique en réflexion se définit par la longueur d'onde dominante (λ dom) en réflexion et par sa pureté.

La longueur d'onde dominante, mesurée par spectrophotométrie, est déterminée, en fonction d'un illuminant ; l'illuminant D₆₅ est habituellement utilisé pour le bâtiment et l'illuminant A pour l'automobile.

Dans l'invention, on a choisi la pureté la plus faible possible comme critère pour obtenir la meilleure neutralité optique en réflexion.

On a pu obtenir des vitrages selon l'invention, comprenant une couche d'Al₂O₃-SnO₂ et une couche semi-conductrice d'oxyde métallique présentant une pureté inférieure à 10 %, quel que soit l'illuminant choisi.

On pense que cette neutralité optique en réflexion est due à l'aspect homogène de la couche d'Al₂O₃-SnO₂, obtenue selon l'invention, à partir d'un mélange particulier de composés spécifiques et par pyrolyse en phase liquide.

Les exemples suivants non limitatifs illustrent l'invention.

Les exemples 1 à 3 concernent l'obtention d'une couche d'Al₂O₃-SnO₂ à partir de DBTO comme composé de l'étain. Les exemples 4 à 6 concernent des couches d'Al₂O₃-SnO₂ obtenues à partir de DBTA. Les exemples 7 à 13 décrivent la formation d'une couche semi-conductrice sur une couche d'Al₂O₃-SnO₂ obtenue selon les exemples 2 à 6.

### EXEMPLE 1

On prépare une solution A de DBTO. Pour cela, on dissous 700 g de DBTO à 50-60°C, sous agitation, dans 1000 ml d'éthanol à 95° GL, après addition de 200 g d'acétate d'ammonium. On utilise de l'acétate d'ammonium pour obtenir la dissolution maximale du DBTO. On obtient 1,7 l de solution, soit une solution de 19,6 g de Sn pour 100 ml.

On prépare une solution B de chélate d'aluminium non hydrolysable (isovalérylacétonate d'aluminium) dans de l'acétate d'éthyle à raison de 2,6 g d'aluminium pour 100 ml de solution.

On mélange rapidement les deux solutions A et B, à raison de 30 ml de solution A et 70 ml de solution B. Les deux solutions sont totalement miscibles.

Dans la solution finale C, le rapport des concentrations exprimées en poids de métal Al/Sn est de 0,31.

Ce mélange est utilisé dans un dispositif de pulvérisation, tel que celui décrit dans le brevet FR-2 176 760 pour former une couche d'Al₂O₃-SnO₂ sur un substrat de verre flotté, d'une épaisseur de 6 mm et d'une largeur de 3,4 m.

Le dispositif de pulvérisation est disposé à la sortie du four float. La température du substrat de verre est de 600°C et la vitesse de défilement du verre est de 6 m/mn.

On utilise l'air comme gaz d'atomisation à un débit de 34 m³/h. La solution C des composés métalliques est pulvérisée sur le ruban de verre à raison de 33 l/h à partir d'un pistolet de pulvérisation qui se déplace transversalement à la direction de défilement du substrat de verre, à une vitesse de 2,5 m/s.

On obtient une couche d'Al₂O₃-SnO₂ pour laquelle le rapport Al/Sn est de 1,36.

Le substrat de verre portant la couche d'Al₂O₃-SnO₂ passe dans une étenderie de recuisson et après refroidissement, il est découpé.

On mesure par ellipsométrie l'épaisseur et l'indice de réfraction de la couche. L'épaisseur est de 90 nm avec une variation d'épaisseur de Δ e/e de 5 %.

L'indice de réfraction de la couche, après son dépôt, est de 1,80 ± 0,01.

La couche est réchauffée à une température de 650°C pour simuler les conditions thermiques auxquelles elle sera soumise pour le dépôt ultérieur de la couche semi-conductrice. L'indice de réfraction, après le réchauffage est de 1,66 ± 0,01. L'indice ne varie plus après un autre réchauffage. L'épaisseur de la couche est stable.

Le coefficient d'absorption de la lumière solaire est de 3 % environ.

### EXEMPLES 2 ET 3

On opère comme à l'exemple 1, mais les solutions C finales utilisées pour la pulvérisation comprennent respectivement 40 % et 50 % en volume de DBTO. Les rapports Al/Sn dans les solutions sont de 0,20 pour l'exemple 2 (40 % de DBTO) et de 0,13 pour l'exemple 3 (50 % DBTO). Les couches ont une épaisseur de 90 nm.

Les rapports Al/Sn dans les couches obtenues sont respectivement de 1,32 et 1,23.

Les indices de réfraction, après dépôt sont respectivement de 1,85 ± 0,02 et 1,92 ± 0,01 et après réchauffage à 650°C de 1,72 ± 0,01 pour la couche de l'exemple 2 et 1,75 ± 0,01 pour la couche de l'exemple 3.

### EXEMPLE 4

On prépare une solution de chélate d'aluminium comme à l'exemple 1.

Comme composé de l'étain, on utilise du DBTA pur.

On mélange la solution de chélate d'aluminium et le DBTA, à raison de 13 % en volume de DBTA pur et 87 % en volume de solution de chélate d'aluminium.

Dans la solution finale, le rapport Al/Sn est de 0,67.

On forme une couche d'Al₂O₃-SnO₂ ayant une épaisseur de 90 nm, par pyrolyse liquide comme indiqué à l'exemple 1. Le rapport Al/Sn dans la couche est de 1,33.

On mesure par ellipsométrie l'épaisseur et l'indice de réfraction de la couche.

Après le dépôt, l'indice de réfraction est de 1,80-1,81 ; après réchauffage de la couche, comme à l'exemple 1, à 650°C, pour simuler les conditions thermiques de dépôt ultérieur de couches semi-conductrices, l'indice de réfraction est de 1,66 ± 0,01.

L'épaisseur de la couche reste stable.

### EXEMPLES 5 ET 6

On opère comme à l'exemple 4, mais les solutions devant servir à la pulvérisation sur le support chaud (600°C) comprennent respectivement 20 % en volume de DBTA pur (exemple 5) et 30 % en volume de DBTA pur (exemple 6). Les rapports Al/Sn dans les solutions sont respectivement de 0,40 (exemple 5) et 0,23 (exemple 6).

On forme des couches d'Al₂O₃-SnO₂ d'une épaisseur de 90 nm (exemple 5) et de 110 nm (exemple 6), par pyrolyse liquide comme indiqué à l'exemple 1. Les rapports Al/Sn dans les couches sont respectivement de 1,30 et de 1,27.

Les indices de réfraction, après dépôt, sont respectivement de 1,84 ± 0,02 pour la couche de l'exemple 5 et de 1,95 ± 0,02 pour la couche de l'exemple 6. Après réchauffage à 650°C, les indices de réfraction sont respectivement de 1,72 ± 0,01 (exemple 5) et 1,75 ± 0,01 (exemple 6).

L'absorption des couches des exemples 4 à 6 pour la radiation de 550 nm, est de l'ordre de 6 à 10 % après dépôt. Le réchauffage des couches à 650°C permet de l'abaisser de 2 à 3 %. Le réchauffage des couches provoque une diminution de l'absorption lumineuse par élimination du carbone incorporé dans la couche.

Un deuxième réchauffage ne modifie plus les propriétés optiques des couches.

L'épaisseur des couches reste stable.

Les exemples suivants décrivent la formation d'une couche semi-conductrice sur une couche d'Al₂O₃-SnO₂ telle que formée aux exemples 2 à 6.

### EXEMPLE 7

Sur la couche d'Al₂O₃-SnO₂ obtenue à l'exemple 2 (épaisseur 90 nm et indice de réfraction de 1,72 ± 0,01) et réchauffée à 650°C, on forme une couche de SnO₂ dopé au fluor (SnO₂:F) par pyrolyse de difluorure dibutylétain (DBTF) en poudre pour obtenir une couche d'une épaisseur de 320 nm. La couche de SnO₂:F présente un indice de réfraction de 2 environ. Son émissivité est de 0,24.

Le produit obtenu ne présente pas d'irisations ou ondulations.

On mesure le coefficient de réflexion RL du produit portant les deux couches (sous-couche d'Al₂O₃-SnO₂ et couche de SnO₂:F), pour l'illuminant D₆₅. Il est de 13 %.

La longueur d'onde dominante (λ dom) en réflexion, déterminée par spectrophotométrie, en fonction de l'illuminant D₆₅ (habituellement utilisé pour les vitrages destinés aux bâtiments) est de 487 - 508 nm et sa pureté de 10 %.

### EXEMPLE 8

On forme, comme décrit à l'exemple 7, une couche de SnO2:F sur la couche d'Al₂O₃-SnO₂ obtenue à l'exemple 3 (épaisseur 90 nm et indice de réfraction 1,75 ± 0,01).

La couche de SnO₂:F a une épaisseur de 320 nm, un indice de réfraction d'environ 2 et son émissivité est de 0,24.

Le produit obtenu ne présente pas d'irisations ou d'ondulations.

Le coefficient de réflexion R_{L} du produit, pour l'illuminant D₆₅, est de 13 %. La longueur d'onde dominante en réflexion, déterminée par spectrophotométrie, en fonction de l'illuminant D₆₅ est de 483 nm et sa pureté de 9 %.

A titre de comparaison, on a préparé un produit comprenant un support de verre et une couche de SnO₂:F, obtenue comme précédemment dans les exemples 7 et 8 (épaisseur de 320 nm, indice de réfraction de 2 environ et émissivité de 0,23). Le coefficient de réflexion R_{L}, pour l'illuminant D₆₅ est de 11 %. La longueur d'onde dominante en réflexion est de 478 - 481 nm et sa pureté de 10 %.

Le verre obtenu à l'exemple 8 avec une sous-couche d'Al₂O₃-SnO₂ telle que préparée à l'exemple 3 présente la meilleure neutralité optique. La longueur d'onde dominante en réflexion est de couleur bleue (483 nm) avec une pureté égale à 9 %.

On a étudié l'influence de l'épaisseur de la couche semi-conductrice de SnO₂ dopé au fluor sur les propriétés optiques de la structure à deux couches (sous-couche d'Al₂O₃-SnO₂ obtenue à l'exemple 3 et couche de SnO₂ dopé au fluor) ainsi que l'émissivité des couches de SnO₂ dopé au fluor.

### EXEMPLE 9

On forme un produit comprenant un support de verre, une couche d'Al₂O₃-SnO₂ telle qu'obtenue à l'exemple 3 (e = 90 nm et n = 1,75 ± 0,01) et une couche de SnO₂:F obtenue comme à l'exemple 7, mais d'une épaisseur de 300 nm.

L'émissivité de la couche de SnO₂ est de 0,25.

La longueur dominante en réflexion de l'ensemble des couches est 483 nm et sa pureté de 9 %. Le coefficient de réflexion R_{L} est de 12 %.

### EXEMPLE 10

On forme un autre produit comme à l'exemple 9, l'épaisseur de la couche de SnO₂:F étant de 360 nm.

L'émissivité de la couche de SnO₂:F est de 0,22. La longueur d'onde dominante en réflexion de 487 nm et sa pureté de 5 %. Le coefficient de réflexion R_{L} est de 12 %.

On constate que l'émissivité de la couche de SnO2:Fdiminue lorsque l'épaisseur de la couche augmente et que la longueur d'onde dominante en réflexion de l'ensemble des 2 couches n'est pratiquement pas modifiée.

Par contre, la pureté (critère de neutralité optique) est améliorée lorsque l'épaisseur de la couche de SnO₂:F augmente.

On a aussi déterminé les caractéristiques lumineuses de ce produit en fonction de l'illuminant A. Le coefficient de réflexion R_{L} est de 12 %. La longueur d'onde dominante en réflexion est de 497 nm et sa pureté de 3 %.

Par suite des propriétés que présentent ces produits obtenus aux exemples 7 à 10, ils sont avantageusement utilisables comme vitrages bas émissifs pour le bâtiment.

Les résistivités des couches de SnO₂:F dans ces différents produits sont de l'ordre de 6.10⁻⁴ Ω.cm. Ces produits sont donc particulièrement utilisables comme vitrages chauffants pour l'automobile.

### EXEMPLE 11

Sur une couche Al₂O₃-SnO₂, telle qu'obtenue à l'exemple 4 à partir de DBTA comme composé de l'étain (épaisseur 90 nm, indice de réfraction après réchauffage 1,66 ± 0,01), on forme une couche semi-conductrice de SnO₂ dopé au fluor (SnO₂:F).

Pour cela, la couche d'Al₂O₃-SnO₂ est réchauffée à 650°C et on forme la couche de SnO₂:F par pyrolyse à partir de difluorure dibutylétain (DBTF) en poudre pour obtenir une couche de 320 nm. L'indice de réfraction est de 2 environ. L'émissivité est de 0,25.

Le coefficient de réflexion R_{L} du produit obtenu, pour l'illuminant D₆₅, est de 12 %. On détermine en outre, par spectrophotométrie, la longueur d'onde dominante (λ dom) en réflexion en fonction de l'illuminant D₆₅ ainsi que sa pureté. λ dom est de 482 nm et la pureté de 21 %.

### EXEMPLE 12

On forme comme à l'exemple 11, une couche de SnO₂:F d'une épaisseur de 320 nm, sur une couche d'Al₂O₃-SnO₂ obtenue à partir de DBTA, celle préparée à l'exemple 5 (épaisseur de 90 nm et indice de réfraction de 1,72 ± 0,01).

Le produit ne présente pas d'irisations ou d'ondulations.

L'émissivité de la couche de SnO₂:F est de 0,25.

Le coefficient de réflexion R_{L} du produit, pour l'illuminant D₆₅ est de 12 % ; la longueur d'onde dominante en réflexion est de 491 nm et sa pureté de 10 %.

### EXEMPLE 13

On prépare, comme à l'exemple 11, un produit comprenant une sous-couche d'Al₂O₃-SnO₂ obtenue à partir de DBTA (exemple 6, n = 1,75 ± 0 01 et e = 110 nm) et une couche de SnO₂:F d'une épaisseur de 320 nm. Elle présente une émissivité de 0,24.

Le produit obtenu ne présente pas d'irisations ou d'ondulations.

Les caractéristiques lumineuses du produit ont été déterminées en fonction de l'illuminant D₆₅ et de l'illuminant A.

Dans le premier cas (illuminant D₆₅), le coefficient de réflexion R_{L} est de 11,5 % ; la longueur d'onde dominante en réflexion est de 484 nm et sa pureté de 9 %.

Dans le deuxième cas (illuminant A), le coefficient de réflexion R_{L} est de 11,3 % ; la longueur d'onde dominante en réflexion est de 499 nm et sa pureté de 7,3%.

On peut noter que le produit comprenant une couche d'AL₂O₃-SnO₂ obtenue à partir de DBTA avec un rapport Al/Sn dans la couche de 1,27 présente la meilleure neutralité optique. Comme dans le cas de la couche d'Al₂O₃-SnO₂ obtenue à partir de DBTO (50 % en volume dans la solution), la longueur d'onde dominante en réflexion est de couleur bleue (483 - 484 nm) avec une pureté égale à 9 %.

On peut observer que, lorsque dans la couche d'Al₂O₃-SnO₂ le rapport Al/Sn est de 1,33 ou 1,30 (exemples 11 et 12), la pureté de la longueur d'onde dominante en réflexion est de 21 % et 13 % respectivement. Les structures formées par les 2 couches Al₂O₃-SnO₂/SnO₂:F ne peuvent être considérées comme neutres en réflexion et, par conséquent, elles ne peuvent être avantageusement utilisées comme vitrages pour le bâtiment et l'automobile.

Les produits obtenus aux exemples 11 à 13 présentent une résistivité de l'ordre de 6.10⁻⁴ Ω.cm. Les produits des exemples 12 et 13 peuvent être avantageusement utilisés comme vitrages chauffants, notamment dans les automobiles.

Les produits obtenus selon l'invention sont résistants chimiquement, notamment aux acides.

### EXEMPLE 14

A titre de témoin, on a fabriqué un produit formé d'un même substrat de verre et d'une couche d'oxyde d'étain dopé au fluor (SnO₂:F) obtenue par pyrolyse de difluorure de dibutylétain (DBTF) en poudre. L'épaisseur de la couche de SnO₂:F est de 310 nm ± 10 nm. Le produit ne comprend pas de sous-couche. La longueur d'onde dominante, déterminée en fonction de l'illuminant D₆₅ est de 489 nm et sa pureté de 20 %. Les caractéristiques lumineuses T_{L}, R_{L} du produit sont respectivement de 77 % et 11 % environ.

La résistance chimique des verres portant une sous-couche d'Al₂O₃-SnO₂ selon l'invention et une couche semi-conductrice de SnO₂:F a été déterminée en immergeant des échantillons de ces verres dans une solution normale d'acide chlorhydrique à 100°C et, aussi, dans une solution d'acide fluorhydrique à 20°C, formée par 7 ml d'une solution à 40 % de HF dilués dans un litre d'eau.

Dans tous les cas, on a constaté un début d'attaque par ces acides après plus de 30 mn, ce qui permet de dire que ces verres ont une résistance chimique excellente.

Dans les exemples précédents, la couche semi-conductrice est formée d'oxyde d'étain dopé au fluor. Des vitrages présentant des propriétés analogues peuvent être obtenus, en utilisant une autre couche semi-conductrice, par exemple une couche d'oxyde d'indium dopé à l'étain (ITO). Une telle couche présente en outre l'avantage d'avoir une émissivité de 0,11 environ pour une épaisseur de 180 nm.

Les produits selon l'invention qui comprennent une couche d'Al₂O₃-SnO₂ et une couche semi-conductrice, comme décrit précédemment, et qui ne présentent pas de coloration gênante du point de vue esthétique, peuvent être aussi utiles comme vitrages d'automobile, par exemple des vitrages chauffants, notamment pour former des pare-brise.

Dans ce cas, ces produits peuvent être associés à une feuille de polymère plastique tel que du polyuréthane disposée au contact de la couche semi-conductrice pour constituer un vitrage feuilleté à un seul support de verre. Les produits selon l'invention peuvent être aussi associés à une autre plaque de verre par l'intermédiaire d'une feuille de polymère plastique tel que du polybutyralvinylique, du polyuréthane ou du polychlorure de vinyle, pour former un vitrage feuilleté à deux plaques de verre.

Pour l'alimentation en courant électrique de la couche semi-conductrice, ces vitrages comprennent des amenées de courant, telles que clinquants en cuivre et/ou bandes sérigraphiées à l'argent, disposées le long des bords supérieur et inférieur des vitrages. L'émail noir généralement déposé sur ces vitrages pour cacher, notamment, les amenées de courant, n'est pas dénaturé par la présence de la couche d'Al₂O₃-SnO₂.

D'autre part, la couche d'Al₂O₃-SnO₂ présente une bonne adhérence sur le verre, ce qui favorise la bonne cohésion de ces ensembles verre, couche semi-conductrice et feuille de polymère.

Les produits selon l'invention, comprenant une couche d'AL₂O₃-SnO₂ et une couche semi-conductrice, par exemple de SnO₂:F ou d'ITO, peuvent subir l'étape de bombage sans inconvénients car ces couches, déposées par pyrolyse, sont résistantes mécaniquement.

Les couches d'Al₂O₃-SnO₂, obtenues selon l'invention, qui sont transparentes et sont très uniformes du point de vue de l'épaisseur, sont aussi utiles dans des vitrages anti-reflets.

On a obtenu un tel vitrage en formant sur un substrat de verre d'indice de réfraction égale à 1,52, une couche d'Al₂O₃-SnO₂ à partir d'une solution contenant du DBTO selon l'invention et dont le rapport Al/Sn était de 0,17 conduisant à une couche d'indice de réfraction de 1,74 et d'épaisseur de 60 - 70 nm ; l'épaisseur optique de la couche selon l'invention est égale à λ /4. Sur cette couche, on a formé, comme il est connu, une couche de TiO₂ par pyrolyse liquide, pour que son épaisseur optique soit égale à λ /2, puis une couche de SiO₂, par exemple par CVD plasma, dont l'épaisseur optique était de λ /4.

Le coefficient de réflexion lumineuse du vitrage était inférieur à 1 % par face traitée, la présence de la sous-couche d'Al₂O₃-SnO₂, par suite de l'uniformité de son épaisseur, permet d'obtenir un coefficient de réflexion plus homogène sur tout le produit.

Les couches d'Al₂O₃-SnO₂ obtenues selon l'invention constituent, en outre, des couches barrière à la diffusion des ions alcalins. Les verres portant ces couches peuvent dont être utiles comme substrats dans des dispositifs opto-électroniques tels que des dispositifs d'affichage à cristaux liquides, dans lesquels la diffusion des ions alcalins, particulièrement le sodium, doit être évitée.

## Revendications

1. Procédé de formation d'une couche d'oxydes d'aluminium et d'étain sur un support en verre chauffé à une température inférieure à la température de ramollissement du verre, à partir de composés organiques de l'aluminium et de l'étain se décomposant thermiquement au contact du verre chaud et s'oxydant pour former ladite couche, **caractérise en ce qu'**on projette sur le support en verre chaud, une solution d'un chélate d'aluminium non hydrolysable et d'au moins un composé organique de l'étain.

2. Procédé conforme à la revendication 1, **caractérisé en ce que** le chélate d'aluminium est l'acétylacétonate d'aluminium ou l'isovalérylacétonate d'aluminium.

3. Procédé conforme à l'une des revendications 1 et 2, **caractérisé en ce que** le composé de l'étain est un composé organique non halogéné contenant de l'oxygène.

4. Procédé conforme à la revendication 3, **caractérisé en ce que** le composé de l'étain est l'oxyde de dibutylétain ou le dibutyldiacétate d'étain.

5. Procédé conforme à la revendication 4, **caractérisé en ce que** la solution comprend de 13 % à 30 % en volume de DBTA ou 30 % à 50 % en volume de DBTO.

6. Procédé conforme à la revendication 5, **caractérisé en ce que** le rapport des concentrations en composé de l'aluminium et en composé de l'étain, exprimées en poids de métal (Al/Sn) dans la solution est compris entre 0,10 et 0,70.

7. Procédé conforme à l'une quelconque des revendications 1 à 6, **caractérisé en ce que** la température du verre est de 600 à 650°C.

8. Procédé conforme à l'une quelconque des revendications 1 à 7, **caractérisé en ce que** le support de verre se défile à une vitesse de 3 à 25 m/s.

9. Produit obtenu par le procédé conforme à l'une des revendications 1 à 8, comprenant un support de verre et une couche d'oxydes d'aluminium et d'étain ayant un indice de réfraction compris entre 1,65 et 1,76.

10. Produit conforme à la revendication 9, **caractérisé en ce que** la couche d'oxydes d'aluminium et d'étain, a une épaisseur comprise entre 40 nm et 150 nm avec une variation d'épaisseur Δ e/e inférieure ou égale à 5 % et un coefficient d'absorption inférieur ou égal à 3 %.

11. Produit conforme à l'une des revendications 9 ou 10, **caractérisé en ce qu'**il comprend, sur la couche d'oxydes d'aluminium et d'étain, une couche transparente semi-conductrice d'oxyde métallique.

12. Produit conforme à la revendication 11, **caractérisé en ce que** la couche semi-conductrice est une couche d'oxyde d'étain dopé au fluor, ou une couche d'oxyde d'indium dopé à l'étain ou une couche d'oxyde de zinc dopé à l'indium ou à l'aluminium.

13. Produit conforme à l'une des revendications 11 ou 12, **caractérisé en ce que** la couche d'oxydes d'aluminium et d'étain ou de titane a une épaisseur comprise entre 80 et 100 nm et la couche transparente semi-conductrice d'oxyde métallique a une épaisseur comprise entre 100 nm et 800 nm, l'ensemble des deux couches constituant une structure neutre en réflexion avec une pureté en réflexion, inférieure ou égale à 10 %.

14. Produit conforme à la revendication 12, **caractérisé en ce que** la couche d'oxyde d'aluminium et d'étain a un indice de réfraction de 1,75 ± 0,01 et une épaisseur de 90 nm et la couche semi-conductrice a une épaisseur de 360 nm et l'ensemble des deux couches, couches d'oxydes d'aluminium et d'étain et couche semi-conductrice d'oxyde métallique, constituant une structure neutre en réflexion, avec une pureté en réflexion de 5 % environ.

15. Vitrage bas émissif constitué d'un produit selon l'une des revendications 11 à 14, **caractérisé en ce que** la couche semi-conductrice est formée d'oxyde d'étain dopé au fluor qui présente une émissivité inférieure ou égale à 0,27 pour une épaisseur supérieure ou égale à 300 nm.

16. Vitrage chauffant constitué d'un produit selon l'une des revendications 11 à 14 dans lequel la couche semi-conductrice d'oxyde métallique présente une résistivité d'environ 6.10⁻⁴ Ω.cm.

17. Vitrage feuilleté chauffant conforme à la revendication 16, qui comprend, au contact de la couche semi-conductrice, une feuille intercalaire de polymère plastique du type PVB, PVC ou PU, associée à une plaque de verre, et des amenées de courant disposées le long des bords supérieur et inférieur du vitrage.

18. Vitrage constitué d'un produit selon l'une des revendications 11 à 14 servant de substrat pour dispositifs opto-électroniques.

19. Vitrage anti-reflets constitué d'un produit selon la revendication 9 comprenant une couche d'oxydes d'aluminium et d'étain d'une épaisseur de 60 nm - 70 nm et ayant un indice de réfraction de 1,74 ± 0,01, une couche d'oxyde de titane et une couche de silice, les épaisseurs optiques des couches étant respectivement de λ /4, λ /2 et λ /4.
